# EUROPÄISCHE PATENTANMELDUNG

(11) **EP 1 777 275 A2**
(43) Veröffentlichungstag der Anmeldung: **25.04.2007**
(21) Anmeldenummer: 06121777.4
(22) Anmeldetag: 05.10.2006
(51) Int. Cl.: C09J 7/00, C09J 7/02, B32B 7/06, B32B 7/12

(54) **Beidseitig klebendes Klebeband**

(30) Priorität: 19.10.2005 DE 102005050452
(71) Anmelder: tesa AG, 20253 Hamburg (DE)
(72) Erfinder: Busch, Klaus-Jürgen, 21629, Neu Wulmstorf (DE)

(57) **Zusammenfassung**

Die Erfindung betrifft ein beidseitig klebendes Klebeband (100), auf dem beidseitig eine erste und zweite selbstklebende Schicht (11, 12) aufgebracht ist, wobei die erste selbstklebende Schicht (11) der Fixierung eines Abdeckmaterials (13) dient und die zweite selbstklebende Schicht (12) an einem Haftgrund (14) klebt. Um einen Schutz des Abdeckmaterials (13) vor äußeren Einflüssen zu gewährleisten, schlägt die Erfindung vor, dass das beidseitig ausgebildete Klebeband (100) mit einem Abdeckklebeband (13), das aus einem Trägermaterial (17) und einer auf dem Trägermaterial (17) befindlichen Klebeschicht (18) besteht, zu einer Einheit verbindbar ist, wobei die Klebeschicht (18) und das Abdeckmaterial (13) miteinander verklebbar sind.

## Beschreibung

Die Erfindung betrifft ein beidseitig klebendes Klebeband, auf dem beidseitig eine erste und zweite selbstklebende Schicht aufgebracht ist, wobei die erste selbstklebende Schicht der Fixierung eines Abdeckmaterials dient und die zweite selbstklebende Schicht an einem Haftgrund klebt.

Aus dem Stand der Technik sind beidseitig klebende Klebebänder bekannt. Speziell auf Großbaustellen, aber auch im Bau- und Malerhandwerk werden für spezielle Abdeckarbeiten auf empfindlichen Oberflächen Abdecklösungen benötigt, die längerfristige Verklebungen speziell im Außen- und Innenbereich zulassen. Dabei erlaubt die hohe Empfindlichkeit der Abdeckmaterialien nur spezielle qualitativ hochwertige beidseitig klebende Klebebänder. Ein doppelseitig klebendes Klebeband ist beispielsweise das tesa Maskenband 4838. Das tesa Maskenband 4838 dient zum Herstellen von großflächigen Abdeckmaterialien überwiegend im Außenbereich auf glatten Untergründen beim Fassadensanieren, Reinigen, Verputzen, Malen und bei Wärmedämmmaßnahmen. Das Klebeband eignet sich auch für Verklebungen auf wasserverdünnbaren Acryllacken. Ein weiteres doppelseitig klebendes Klebeband stellt das Produkt tesa Power-Twist 7010 dar. Dieses doppelseitig klebende Klebeband zeigt gute Verklebungseigenschaften auf antiadhäsiven, leicht rauen Materialien wie zum Beispiel auf pulverbeschichteten Oberflächen mit Polyesterbeschichtung.

Bei dem tesa Maskenband 4838 handelt es sich um ein beidseitig beschichtetes Abdeckband auf Folienträgerbasis mit weißer Trennpapierabdeckung. Es ist mit einer licht- und alterungsbeständigen Acrylat-Klebmasse sowie einer PIB-Klebemasse (Polyisobutylen) ausgerüstet und leicht von Hand einreißbar. Das Klebeband ist Licht- und insbesondere UV-beständig sowie wärmebeständig bis 70 °C. Das Klebeband übersteht bis gut 8 Wochen Außenwitterungseinflüsse.

Der Aufbau ist wie folgt:
- Acrylatklebemasse (abgedeckte Seite, 25 g/m², Klebkraft 5,1 N/cm)
- Weich PVC Träger
- PIB-Klebemasse (offene Seite, 33 g/m², Klebkraft 3,2 N/cm)

Die Klebemasse auf der Acrylatseite ist beim tesa Maskenband 4838 nicht vollflächig aufgebracht. Vielmehr ist an einer der beiden Kanten ein Streifen massefrei, der ein einfaches Entfernen ermöglicht. Für ein einfacheres Entfernen ist auch die hohe Dehnfähigkeit der PVC-Trägers von Vorteil, die 190 % beträgt. Ein weiterer Vorteil ist die Handeinreißbarkeit des Klebebands für eine schnelle Verarbeitung.

In der heutigen Fassadengestaltung, insbesondere im Hochbau, kommen immer mehr hochwertige und besonders empfindliche Abdeckmaterialien zum Einsatz. Aus diesem Grunde besteht der Wunsch, einen besonderen Schutz für Abdeckmaterialien besonders im Außenbereich zu schaffen.

Es ist deshalb Aufgabe der Erfindung, ein zweiseitig klebendes Klebeband zur Verfügung zu stellen, das neben einer Verklebung mit dem Haftgrund und dem Abdeckmaterial auch einen besonderen Schutz von Abdeckmaterialien vor äußeren Einflüssen bietet.

Gelöst wird diese Aufgabe bei einem zweiseitig klebenden Klebeband durch die in Anspruch 1 genannten Merkmale.

Die Grundidee der Erfindung ist es, eine Kombination von Klebebändern derart herbeizuführen, dass ein zweiseitig klebendes Klebeband mit einem weiteren Klebeband, welches neben einer Klebeschicht auch aus einem auf der Klebeschicht angeordneten Trägermaterial besteht, zu einer Einheit zu verbinden. Auf diese Weise ist gewährleistet, dass sowohl eine Fixierung von Haftgrund und dem zweiseitig klebenden Klebeband und ein besonderer Außenschutz der Abdeckmaterialien gegeben sind. Dadurch, dass das Abdeckklebeband noch mit dem auf der Klebeschicht aufgebrachten Trägermaterial versehen ist, wird ein besonderer Schutz vor äußeren Einflüssen erzielt. Die Abdeckmaterialien sind folglich äußeren störenden Einflüssen nicht ausgesetzt. Als zweiseitig klebendes Klebeband bietet sich dabei das Produkt tesa Power-Twist 7010 an.

Die Produkte tesa 50533 beziehungsweise tesa 4288 können dagegen als Abdeckklebebänder eingesetzt werden. In einem gegenseitigen Konfektionierungsvorgang dieser Klebebänder kann also ein Verbund entstehen, der einerseits eine feste Verklebung auf Haftgrundflächen mit dem Produkt tesa 7010 garantiert und zum anderen durch Integrierung der Produkte tesa 4288 beziehungsweise tesa 50533 einen erhöhten Schutz unterschiedlichster Abdeckmaterialien gewährleistet.

tesa 7010 ist ein doppelseitig haftklebriges, trägerloses Klebeband, das zusätzlich eine vor Anwendung entfernbare Schutzpapierabdeckung aufweist. Es eignet sich für die rückstands- und beschädigungsfrei wiederablösbare Befestigung von insbesondere UVundurchlässigen und spaltfesten Materialien auf glatten, ebenen und leicht rauen Untergründen. Das Produkt besteht aus einer 650 µm Klebmasse aus gleichen Anteilen SIS/SBS (mit nahezu gleichem Klebharzanteil). SBS verleiht der Masse eine erhöhte UV Beständigkeit. Reine SIS-Massen sind weniger alterungs- und UV-beständig als SBS-Massen.
Das Produkt lässt sich leicht von allen Oberflächen durch Dehnen parallel zur Verklebungsfläche rückstandsfrei entfernen.

Weiterhin bevorzugt besteht das zweiseitig klebende Klebeband aus einem hochverstreckbaren, elastisch oder plastisch unter Dehnung verformbaren Material, gegebenenfalls mit einem Zwischenträger, insbesondere mit einem Folien- oder Schaumstoff-Zwischenträger.
Die Adhäsion des Klebebands sollte geringer sein als die Kohäsion, das Haftvermögen beim Dehnen des Klebebands weitgehend verschwinden und das Verhältnis von Abzugskraft zu Reißlast mindestens 1:1,5 sein.
Vorzugsweise ist das Klebeband ein solches auf Basis von thermoplastischem Kautschuk und klebrigmachenden Harzen ist, mit hoher Elastizität und geringer Plastizität.

Erfindungsgemäß geeignete elastisch oder plastisch hochdehnbare zweiseitig klebende Klebebänder, welche sich durch dehnendes Verstrecken in der Verklebungsebene rückstands- und zerstörungsfrei wieder ablösen lassen, sind beispielsweise aus der US 4,024,312 A, DE 33 31 016 C2, WO 92/01132 A1, WO 92/11333 A1, DE 42 22 849 A1, WO 95/06691 A1, DE 195 31 696 A1, DE 196 26 870 A1, DE 196 49 727 A1, DE 196 49 728 A1, DE 196 49 729 A1, DE 197 08 364 A1, DE 197 20 145 A1, DE 198 20 854 A1, WO 99/37729 A1 und DE 100 03 318 A1 bekannt.

Die zweiseitig klebenden Klebebänder können vorzugsweise aus einer Klebemasse bestehen, die auf Blockcopolymere enthaltende Polymerblöcken basiert. Die Blockcopolymere können aus Vinylaromaten (A-Blöcke) wie zum Beispiel Styrol und aus durch Polymerisation von 1,3-Dienen (B-Blöcke) wie zum Beispiel Butadien und Isopren bestehen. Resultierende Blockcopolymere können gleiche oder unterschiedliche B-Blöcke enthalten, die teilweise, selektiv oder vollständig hydriert sein können. Blockcopolymere können lineare A-B-A Struktur aufweisen. Einsetzbar sind ebenfalls Blockcopolymere von radialer Gestalt sowie sternförmige und lineare Multiblockcopolymere. Als weitere Komponente können A-B-Zweiblockcopolymere vorhanden sein. Blockcopolymere von Vinylaromaten und Isobutylen sind ebenfalls einsetzbar. Sämtliche der vorgenannten Polymere können allein oder im Gemisch miteinander genutzt werden.

Anstelle von Polystyrolblöcken können auch Polymerblöcke auf Basis anderer aromatenhaltiger Homo- und Copolymere (C₈- bis C₁₂-Aromaten) mit Glasübergangstemperaturen von > ca. 75 °C genutzt werden, wie zum Beispiel (α-methylstyrolhaltige Aromatenblöcke. Gleichfalls sind Polymerblöcke auf Basis von (Meth)acrylathomo- und (Meth)acrylatcopolymeren mit Glasübergangstemperaturen von > 75 °C nutzbar. Hierbei können sowohl Blockcopolymere zum Einsatz kommen, welche als Hartblöcke ausschließlich solche auf Basis von (Meth)acrylatpolymeren nutzen als auch solche, welche sowohl Polyaromatenblöcke, zum Beispiel Polystyrolblöcke, als auch Poly(meth)acrylatblöcke nutzen.

Anstelle von Styrol-Butadien-Blockcopolymeren und Styrol-Isopren-Blockcopolymeren und deren Hydrierungsprodukten, mithin Styrol-Ethylen/Butylen Blockcopolymere und Styrol-Ethylen/Propylen Blockcopolymere, können ebenfalls Blockcopolymere und deren Hydrierungsprodukte genutzt werden, welche weitere polydienhaltige Elastomerblöcke nutzen wie zum Beispiel Copolymere mehrerer unterschiedlicher 1,3-Diene. Verwendbar sind des Weiteren funktionalisierte Blockcopolymere, bei denen das Blockcopolymer ein maleinsäureanhydridmodifiziertes oder silanmodifiziertes Styrolblockcopolymer ist.

Typische Einsatzkonzentrationen für das Blockcopolymer liegen in einer Konzentration im Bereich zwischen 20 Gew.-% und 70 Gew.-%, insbesondere im Bereich zwischen 30 Gew.-% und 60 Gew.-% und im Bereich von 35 Gew.-% und 55 Gew.-% vor.

Als weitere Polymere können solche auf Basis reiner Kohlenwasserstoffe, zum Beispiel ungesättigte Polydiene, wie natürliche oder synthetisch erzeugtes Polyisopren oder Polybutadien, chemisch im Wesentlichen gesättigte Elastomere wie zum Beispiel ein gesättigtes Ethylen-Propylen-Copolymer, ein (α-Olefincopolymer, ein Polyisobutylen, ein Butylkautschuk, ein Ethylen-Propylenkautschuk, oder ein chemisch funktionalisierter Kohlenwasserstoff wie ein halogenhaltiges, acrylathaltiges oder vinyletherhaltiges Polyolefin enthalten sein, die die vinylaromatenhaltigen Blockcopolymere bis zu ca. 100 phr (parts per hundred parts of resin) bezogen auf das Styrolblockcopolymer ersetzen können.

Die Klebemasse kann durch chemische, insbesondere strahlenchemische Bestrahlung zum Beispiel durch UV-Bestrahlung, γ-Bestrahlung oder durch Bestrahlung mittels schneller Elektronen vernetzt werden.

Das zweiseitig klebende Klebeband kann einen Zwischenträger aufweisen. Geeignete Zwischenträger beinhalten beispielsweise schaumstoffhaltige Trägermaterialien (Schaumstoffzwischenträger), insbesondere Homo- und Copolymere des Ethylens, insbesondere Polyethylene niederer und sehr niederer Dichte (LDPE, LLDPE, VLDPE), Ethylen-Vinylacetat Copolymere, sowie Gemische vorgenannter Polymere. Weitere Polymere können unter anderem sein: Polyvinylacetate, Polypropylene, Polyurethane auf Basis aromatischer und aliphatischer Diisocyanate, Polystyrol, schlagzähmodifizierte Polystyrole, PVC, Acrylatcopolymere. Schaumstoffe können vernetzt oder unvernetzt zum Einsatz kommen.

Die Dicken der eingesetzten Schaumstoffe liegen insbesondere zwischen 175 µm und 10 mm, bevorzugt zwischen 250 µm und 5 mm, besonders bevorzugt zwischen 350 µm und 3 mm. Raumdichten betragen 20 bis 400 kg/m³, bevorzugt 25 bis 250 kg/m³, besonders bevorzugt von 25 bis 150 kg/m³. Die Schaumstruktur kann geschlossenzellig, offenzellig oder gemischtzellig sein. Genutzt werden können verhautete oder nicht verhautete Schäume von integraler oder nicht integraler Struktur. Erfindungsgemäß einsetzbar sind ebenfalls Laminate mehrerer Schaumstoffe.
Offenzellige und gemischtzellige Schäume können einer Imprägnierung unterzogen sein. Zwischen Schaumstoff und Haftklebemassen kann optional eine Sperrschicht integriert sein, um die Wanderung migrationsfähiger Materialien zwischen Haftklebemassen und Schaumstoff zu reduzieren.

tesa 50533 ist als Klebeband zur Sicherung der Kanten von Schutzfoliensystemen, wie sie beispielsweise zur Abdeckung von Automobilen auf dem Transport vom Hersteller zum Händler eingesetzt werden, entwickelt worden. Durch den Einsatz dieses Produktes werden die Schutzfolien besonders in Bereichen schwieriger Geometrie wirkungsvoll gegen Ablösungen sowie Unterwandern durch Feuchtigkeit und Schmutz geschützt. Durch das thermoplastische Trägermaterial ist tesa 50533 UV-beständig und bleibt auch nach langer Außenlagerung physisch stabil.
tesa 50533 besteht aus einer weißen Trägerfolie aus einem coextrudierten PP/PE-Polymerisat mit hohem Titandioxidanteil. Bei der einseitig aufgebrachten Klebemasse handelt es sich um eine harzabgemischte EVA-Klebemasse. Das Produkt wird als Langzeitoberflächenschutzfolie (sechs Monate außenwitterungsbeständig) eingesetzt. Alterungsschutzmittel und Titandioxidanteil machen die Folie extrem UV-stabil, selbst nach sechs Monaten ist eine Versprödung der Folie nicht messbar. (Eine nicht stabilisierte PP- oder PE-Folie würde in diesem Zeitraum verspröden).
Das Polyethylenvinylacetat weist einen Vinylacetatgehalt von 40 Mol-% bis 80 Mol-%, insbesondere 70 Mol-%, und einen Verlustwinkel tan δ von 0,6 bis 1,0, gemessen bei einer Temperatur von 60 °C und einer Frequenz von 10⁻² Hz, und von 0,4 bis 0,7, gemessen bei einer Temperatur von 60 °C und einer Frequenz von 10 Hz, auf.
Der Glasübergangspunkt, gekennzeichnet durch ein tan δ-Maximum, liegt bei Temperaturen von -5 °C bis -25 °C und nimmt im Maximum nahezu frequenzkonstant Werte bis maximal 1,0 an. Dies sichert eine hervorragende Repositionierbarkeit aufgrund sehr niedriger Initialklebkraft. Bei Temperaturen oberhalb von 10 °C bis 30 °C, bevorzugt 20 °C, ist ein Anstieg des tan δ in Abhängigkeit von der Temperatur gefordert. So sollte bei 60 °C der tan δ bei 10⁻² Hz minimal 0,6 betragen, um bei 10 Hz auf minimal 0,4 abzufallen. Dies sichert den deutlichen Anstieg der Verklebungsfestigkeit bereits innerhalb der ersten 30 Minuten nach Verklebung.
Eine andere geeignete Klebemasse besteht aus einem Basispolymer aus Polyethylenvinylacetat (EVA) mit einem Vinylacetatanteil von 40 bis 90 Gew.-% und mit einem Schmelzindex MFI nach ISO 1133 (A/4) von 0,5 bis 25 g/10 min bei 190 °C und 2,16 kg.

Die Klebmassen können zur Erzielung ergänzender gewünschter Eigenschaften abgemischt sein mit einem oder mehreren Additiven wie Klebharzen, Weichmachern, Alterungsschutzmitteln oder Füllstoffen. Klebharze zur Steigerung der adhäsiven Eigenschaften des Klebers sind beispielsweise Kohlenwasserstoffharze (zum Beispiel aus ungesättigten C₅- oder C₇-Monomeren), Terpenphenolharze, Terpenharze aus Rohstoffen wie α- oder β-Pinen, aromatische Harze wie Cumaron-Inden-Harze oder Harze aus Styrol oder α-Methylstyrol, bevorzugt aber Kolophonium und seine Folgeprodukte wie disproportionierte, dimerisierte oder veresterte Harze, wobei Glycole, Glycerin oder Pentaerythrit zur Veresterung eingesetzt werden können sowie weitere wie aufgeführt in Ullmann's Enzyklopädie der technischen Chemie, Band 12, Seiten 525 bis 555 (4. Auflage), Weinheim. Besonders geeignet sind alterungsstabile Harze ohne olefinische Doppelbindung wie zum Beispiel hydrierte Harze. Optional zu verwendende Weichmacher sind beispielsweise aliphatische, cycloaliphatische und aromatische Mineralöle, Di- oder Poly-Ester der Phthalsäure, Trimellitsäure oder Adipinsäure, Polyether sowie flüssige Kautschuke (zum Beispiel Nitril- oder Polyisoprenkautschuke), flüssige Polymerisate aus Buten und/oder Isobuten, Acrylsäureester, Polyvinylether, Flüssig- und Weichharze auf Basis der Rohstoffe zu Klebharze, Wollwachs und andere Wachse oder flüssige Silikone. Um die Klebmassen noch beständiger gegen UV-Einfluss zu machen, ist der Zusatz von Lichtschutzmitteln möglich. Ihre Funktion besteht vorrangig in der Vermeidung der Zersetzung der Klebmasse. Insbesondere HALS-Lichtschutzmittel wie zum Beispiel Dimethylsuccinat-Polymer mit 4-Hydroxy-2,2,6,6-tetramethyl-1-piperidinethanol (CAS-Nr. 65447-77-0), Bis(2,2,6,6-tetramethyl-4-piperidinyl)sebacat (CAS-Nr. 52829-07-9) oder Poly[[6-[(1,1,3,3-tetramethyl butyl) amino]-1,3,5-triazine-2,4-diyl][[(2,2,6,6-tetramethyl-4-piperidyl) imino] hexamethylene [(2,2,6,6-tetramethyl-4-piperidyl) imino]] (CAS-Nr. 70624-18-9) sind für die Klebmassen geeignet. Geeignete Füllstoffe und Pigmente sind beispielsweise Ruß, Titandioxid, Calciumcarbonat, Zinkcarbonat, Zinkoxid, Silicate oder Kieselsäure.
Alternativ kann als Klebemasse eine Acrylatmasse eingesetzt werden.

tesa 4288 besteht aus einem extrem reißfesten und stabilen, 120 µm dicken PP-Träger, auf den einseitig eine Naturkautschukklebemasse aufgebracht ist. Da die intensive schwarze Einfärbung des Trägers denselben UV-undurchlässig macht, kann tesa 4288 trotz eigentlich UV-instabiler Naturkautschukmasse für Außenanwendungen eingesetzt werden.

Neben dem geschilderten Aufbau von tesa 4288 sind ähnliche Klebebänder geeignet, sofern das Klebeband in hohem Maße UV-Licht absorbiert und damit darunter liegende Schichten vor UV-Licht schützt.

Es ist von Vorteil, dass sich die Klebeschicht flächendeckend auf den Abdeckmaterialen befindet. Auf diese Weise ist ein Schutz des gesamten Abdeckmaterials gegeben.

Denkbar ist auch, dass die Klebeschicht zudem mit der zweiten selbstklebenden Schicht des beidseitig klebenden Klebebandes verklebbar ist.

Abdeckmaterialien sind häufig hohen UV-Belastungen ausgesetzt, mit der Folge, dass Qualität und Funktion der Abdeckmaterialien beeinträchtigt werden. Es ist daher wünschenswert, dass das Trägermaterial eine hohe UV-Beständigkeit aufweist. Dazu kann auch dienen, dass das Trägermaterial als schwarze Folie ausgebildet ist. Als Abdeckklebebänder können hierzu beispielsweise die Produkte tesa 50533 oder tesa 4288 Anwendung finden.

Eine besondere Ausgestaltung der Erfindung sieht vor, dass die Klebeschicht partiell mit der zweiten selbstklebenden Schicht des beidseitig klebenden Klebebandes verklebt ist. Somit ist gewährleistet, dass das Trägermaterial, insbesondere eine schwarze Folie, das darunter liegende Abdeckmaterial vollflächig überdeckt. Dazu dient auch, dass die Klebeschicht breitflächig ist und in einer Breite von ca. 8 bis 10 mm mit der zweiten selbstklebenden Schicht des beidseitig klebenden Klebebandes verklebbar ist.

Das Produkt tesa Power-Twist 7010 zeigt sehr gute Verklebungseigenschaften auf antiadhäsiven, leicht rauen Materialien wie zum Beispiel auf pulverbeschichteten Oberflächen mit Polyesterbeschichtung. Von daher ist es von Vorteil, dass der Haftgrund aus einem antiadhäsiven, leicht rauen Material besteht. Als Haftgrund kommt auch ein pulverbeschichtetes Aluminiumprofil in Frage.

Schließlich sieht die Erfindung ein Verfahren zur Fixierung von Abdeckmaterialien vor, bei dem eine erste selbstklebende Schicht eines beidseitig klebenden Klebebandes mit Abdeckmaterialien fixiert wird und eine zweite selbstklebende Schicht an einen Haftgrund fixiert wird, wobei eine Klebeschicht eines Abdeckklebebandes mit dem Abdeckmaterial verklebt wird, wobei auf der Klebeschicht ein Trägermaterial aufgebracht ist, welches das Abdeckmaterial vor äußeren Einflüssen schützt.

Ausführungsbeispiele der Erfindung werden im Folgenden anhand der Zeichnungen näher erläutert. Es zeigen in schematischer Darstellung:
- Fig. 1:: ein beidseitig klebendes Klebeband in Kombination mit einem Abdeckklebeband gemäß der vorliegenden Erfindung und
- Fig. 2:: ein erfindungsgemäßes Klebeband, bei dem das Abdeckklebeband partiell mit dem beidseitig klebenden Klebeband fixiert ist.

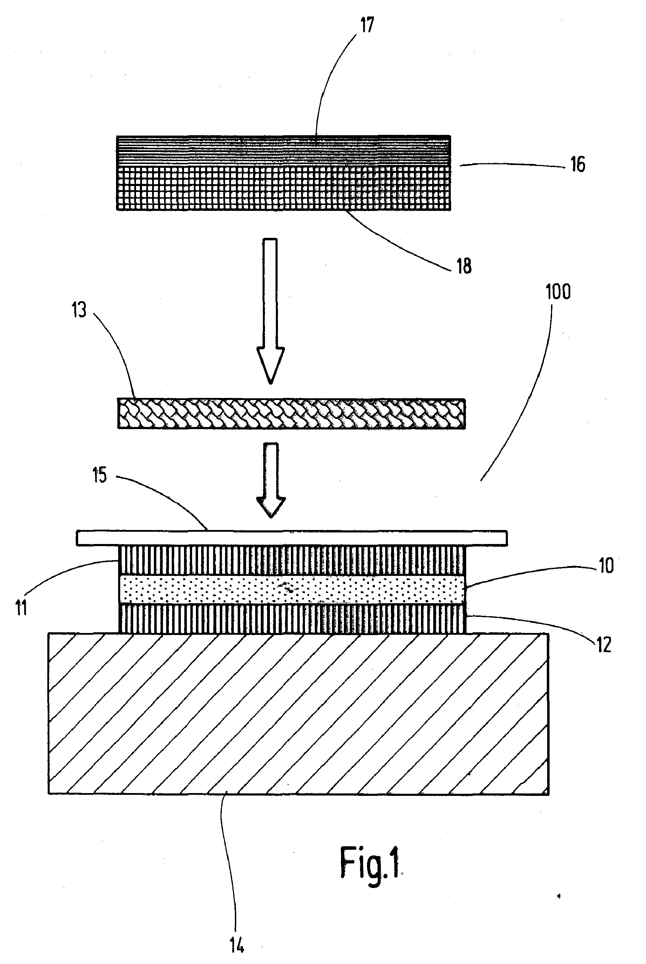

Fig. 1 zeigt ein erfindungsgemäßes beidseitig klebendes Klebeband 100, das aus einem Träger 10 bestehen kann oder trägerlos sein kann, auf dem beidseitig eine erste und zweite selbstklebende Schicht 11, 12 aufgebracht ist, wobei die erste selbstklebende Schicht 11 nach Entfernung des Trennpapiers 15 der Fixierung eines Abdeckmaterials 13 dient und die zweite selbstklebende Schicht 12 an einem Haftgrund 14 klebt. Bei dem Haftgrund 14 kann es sich um ein pulverbeschichtetes Aluminiumprofil, zum Beispiel mit einer Polyesterbeschichtung, handeln. Als zweiseitig klebendes Klebeband 100 kann das Produkt tesa Power-Twist 7010 dienen, welches sehr gute Verklebungseigenschaften auf antiadhäsiven, leicht rauen Materialien wie zum Beispiel auf pulverbeschichteten Oberflächen mit Polyesterbeschichtung aufweist. Das beidseitig ausgebildete Klebeband 100, d. h. vorzugsweise das Produkt tesa Power-Twist 7010, ist mit dem Abdeckklebeband 13, das aus dem Trägermaterial 17 und der auf dem Trägermaterial 17 befindlichen Klebeschicht 18 besteht, zu einer Einheit verbindbar, wobei die Klebeschicht 18 und das Abdeckmaterial 13 miteinander verklebbar sind, wobei die Klebeschicht 18 flächendeckend auf das Abdeckmaterial 13 auftragbar ist. Das Trägermaterial 17 des Abdeckklebebandes 16 ist dabei als schwarze Folie ausgebildet, um das Abdeckmaterial 13 vor UV-Strahlung zu schützen. Als Abdeckklebebänder 16 können die Produkte tesa 50533 und/oder tesa 4288 in Frage kommen. Diese Verklebungen lassen sich zudem durch "Herausstrippen/Dehnen" des Trägers von spaltfesten Materialien rückstandsfrei auch nach längerer Verklebungsdauer im Außenbereich entfernen.

Mit einer solchen fertig konfektionierten Klebebandkombination können folglich Bauelemente zeitsparend großflächig abgedeckt und geschützt werden. Bei der Erstellung von Abdeckmasken ist an den jeweiligen Außenecken der Haftgründe das Klebeband 100 mit ca. 2 cm Überstand zu verkleben. Dieser Überstand dient später als "Anfasser" zum Herausstrippen und Lösen des Verklebungsverbundes, bestehend aus dem zweiseitig klebenden Klebeband 100 und dem Abdeckungsklebeband 16. Der "Anfasser" ist beidseitig mit geeignetem Klebeband ganzflächig abzudecken. Nach der Verklebung auf dem Haftgrund 14 wird das oben liegende Trennpapier 15 entfernt. Die entsprechenden Abdeckmaterialien 13 werden unter leichter Spannung ganzflächig auf die erste selbstklebende Schicht 11 des Klebebandes 100 fixiert. Das Trägermaterial 17 des Abdeckklebebandes 16, insbesondere also das Trägermaterial der Produkte tesa 50533 oder 4288, werden sodann zusätzlich als UV-Blocker auf die Abdeckmaterialien geklebt.

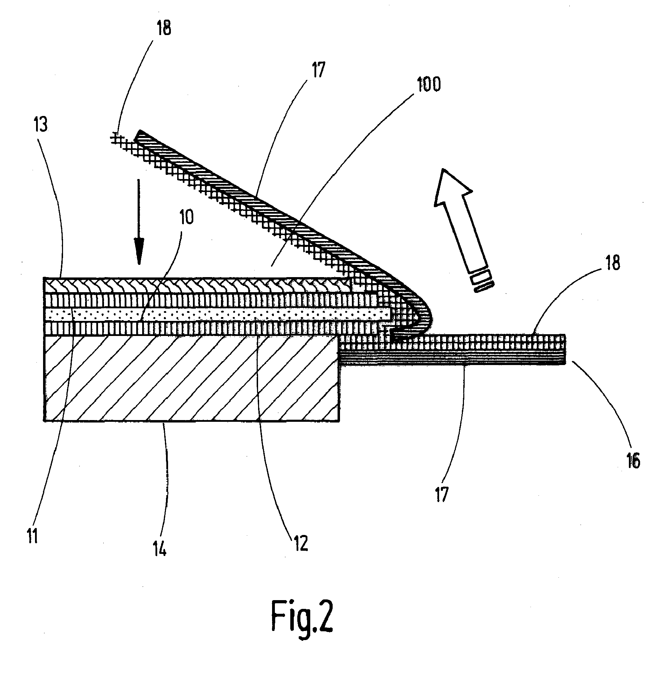

Aus Fig. 2 geht hervor, dass die Klebeschicht 18 zudem mit der zweiten selbstklebenden Schicht 12 des beidseitig klebenden Klebebandes 100 verklebbar ist. Die Klebeschicht 18 des Abdeckklebebandes 16 kann dabei partiell mit der zweiten selbstklebenden Schicht 12 des beidseitig klebenden Klebebandes 100 in Verbindung stehen. Denkbar ist, dass die breitflächige Klebeschicht 18 in einer Breite von ca. 8 bis 10 mm mit der zweiten selbstklebenden Schicht 12 des beidseitig ausgebildeten Klebebandes 100 verklebt ist. Auf diese Weise kann die gesamte Fläche des Abdeckmaterials 13 mit dem Trägermaterial 17 des Abdeckklebebandes 16 versehen werden. Dazu wird das Abdeckklebeband 16 um ca. 180° umgelegt und auf das bereits fixierte Abdeckmaterial 13 verklebt.

Das zweiseitig klebende Klebeband 100, insbesondere das Produkt tesa 7010, wird dabei vom Verarbeiter wie bisher von der Rolle direkt auf den abzuklebenden Haftgrund 14 verklebt. Die erste selbstklebende Schicht 11 des Klebebandes 100 dient dabei zum Befestigen des Abdeckmaterials 13, wie zum Beispiel PE-Bauschutzfolien, Wellpappen, Luftpolsterfolien, Papiere usw. Nach dem Entfernen eines Trennpapiers und Befestigung des Abdeckmaterials 13 kann das Abdeckklebeband 16 umgelegt und auf das bereits fixierte Abdeckmaterial 13 verklebt werden. Dabei kann insbesondere das schwarze Abdeckklebeband tesa 4288 zum Einsatz kommen und die gesamte Fläche des darunter liegenden Abdeckmaterials 13 abdecken und somit die gewünschte Langzeitverklebung mit UV-Schutz garantieren.

### Bezugszeichenliste

- 100: beidseitig klebendes Klebeband
- 10: Träger
- 11: erste selbstklebende Schicht
- 12: zweite selbstklebende Schicht
- 13: Abdeckmaterial
- 14: Haftgrund
- 15: Trennpapier
- 16: Abdeckklebeband
- 17: Trägermaterial
- 18: Klebeschicht

## Patentansprüche

1. Beidseitig klebendes Klebeband, auf dem beidseitig eine erste und zweite selbstklebende Schicht (11, 12) aufgebracht ist, wobei die erste selbstklebende Schicht (11) der Fixierung eines Abdeckmaterials (13) dient und die zweite selbstklebende Schicht an einem Haftgrund (14) klebt, **dadurch gekennzeichnet, dass** das beidseitig ausgebildete Klebeband (100) mit einem Abdeckklebeband (16) zu einer Einheit verbindbar ist, wobei das Abdeckklebeband (16) aus einem Trägermaterial (17) und einer auf dem Trägermaterial befindlichen Klebeschicht (18) besteht, die mit dem Abdeckmaterial (13) verklebbar ist.

2. Klebeband nach Anspruch 1, **dadurch gekennzeichnet, dass** die Klebeschicht (18) flächendeckend auf dem Abdeckmaterial (13) aufgetragen ist.

3. Klebeband nach Anspruch 1 oder 2, **dadurch gekennzeichnet, dass** die Klebeschicht (18) mit der zweiten selbstklebenden Schicht (12) des beidseitig klebenden Klebebandes (100) verklebbar ist.

4. Klebeband nach einem der vorhergehenden Ansprüche, **dadurch gekennzeichnet, dass** das Trägermaterial (17) eine hohe UV-Beständigkeit aufweist.

5. Klebeband nach einem der vorhergehenden Ansprüche, **dadurch gekennzeichnet, dass** das Trägermaterial (17) als schwarze Folie ausgebildet ist.

6. Klebeband nach einem der Ansprüche 3 bis 5, **dadurch gekennzeichnet, dass** das Trägermaterial (17) partiell mit der zweiten selbstklebenden Schicht (12) des beidseitig klebenden Klebebandes (100) verklebbar ist.

7. Klebeband nach einem der Ansprüche 3 bis 5, **dadurch gekennzeichnet, dass** die Klebeschicht (18) breitflächig ist und in einer Breite von ca. 8 bis 10 mm mit der zweiten selbstklebenden Schicht (12) des beidseitig ausgebildeten Klebebandes (100) verklebbar ist.

8. Klebeband nach einem der vorhergehenden Ansprüche, **dadurch gekennzeichnet, dass** der Haftgrund (14) ein pulverbeschichtetes Aluminiumprofil ist.

9. Klebeband nach einem der Ansprüche 1 bis 7, **dadurch gekennzeichnet, dass** der Haftgrund (14) aus einem antiadhäsiven, rauen Material besteht.

10. Klebeband nach einem der vorhergehenden Ansprüche, **dadurch gekennzeichnet, dass** das beidseitig klebende Klebeband von einem doppelseitig haftklebrigen, trägerlosen Klebeband gebildet wird.

11. Verfahren zur Fixierung eines Abdeckmaterials (13), bei dem eine erste selbstklebende Schicht (11) eines beidseitig klebenden Klebebandes (100) mit dem Abdeckmaterial (13) und eine zweite selbstklebende Schicht (11) des beidseitig klebenden Klebebandes (100) mit einem Haftgrund (14) fixiert wird, **dadurch gekennzeichnet, dass** eine Klebeschicht eines Abdeckklebebandes (16) mit dem Abdeckmaterial (13) verklebt wird, wobei auf der Klebeschicht (18) ein Trägermaterial (17) aufgebracht ist, welches das Abdeckmaterial (13) vor äußeren Einflüssen schützt.

12. Verfahren nach Anspruch 11, **dadurch gekennzeichnet, dass** die Klebeschicht (18) flächendeckend auf das Abdeckmaterial (13) aufgebracht wird.

13. Verfahren nach Anspruch 11 oder 12, **dadurch gekennzeichnet, dass** die Klebeschicht (18) mit der zweiten selbstklebenden Schicht (12) des beidseitig klebenden Klebebandes (100) verklebt wird.
